(19)

Europäisches
Patentamt

European
Patent Office

Office européen
des brevets

(11) **EP 3 543 921 A1**

(12) **EUROPÄISCHE PATENTANMELDUNG**

(43) Veröffentlichungstag:
**25.09.2019 Patentblatt 2019/39**

(21) Anmeldenummer: **18162934.6**

(22) Anmeldetag: **20.03.2018**

(51) Int Cl.:
**G06Q 10/06** *(2012.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **fLUMEN GbR**
**78462 Konstanz (DE)**

(72) Erfinder:
• **Geiger, Mauritius Gunfried Gerhard**
**78462 Konstanz (DE)**
• **Bodynek, Andreas Anton**
**79288 Gottenheim (DE)**
• **Lu, Dr. Long**
**78462 Konstanz (DE)**

(74) Vertreter: **Maiwald Patent- und Rechtsanwaltsgesellschaft mbH**
**Elisenhof**
**Elisenstraße 3**
**80335 München (DE)**

(54) **STROMANALYSEVORRICHTUNG UND STROMANALYSEVERFAHREN FÜR EIN PRODUKTIONSNETZWERK**

(57) Die vorliegende Erfindung betrifft eine Stromanalysevorrichtung (100) für ein Produktionsnetzwerk, wobei die Stromanalysevorrichtung (100) umfasst: eine Datenextraktionseinrichtung (110), welche dazu ausgebildet ist, Unternehmensobjektdaten zu extrahieren; eine Datentransformationseinrichtung (120), welche dazu ausgebildet ist, die extrahierten Unternehmensobjektdaten in Gitterstrukturdaten zu transformieren; und eine Datenanalyseeinrichtung (130), welche dazu ausgebildet ist, auf die transformierten Gitterstrukturdaten eine Operatorenrechnung und/oder eine graphentheoretische Berechnung anzuwenden, um eine Zeitentwicklung und mögliche Kennzahlwerte für das Produktionsnetzwerk zu erhalten.

Fig. 1

EP 3 543 921 A1

**Beschreibung**

Technisches Gebiet

Die vorliegende Erfindung betrifft automatisierte Wertstromanalysen und die Produktionsprozess-orientierte Überwachung der Produktionsabläufe in einer Produktionsanlage. Die Stromanalysevorrichtung verbindet in Echtzeit die Produktionsschritte mit einer Datenverarbeitungsanlagen-basierten Überwachung der Produktions- und Materialflüsse.

Insbesondere betrifft die vorliegende Erfindung eine Stromanalysevorrichtung und ein Stromanalyseverfahren für ein Produktionsnetzwerk sowie ein entsprechendes Produktionsnetzwerk.

Technischer Hintergrund

Die WO 2015/019315 A1 beschreibt ein System für Produktionsressourcenplanung, auf Englisch bezeichnet als "Enterprise Resource Planning", abgekürzt ERP.

Das dort beschriebene ERP-Einzelintegrations-System besteht aus neun Basismodulen und sechzehn optionalen Modulen. Das dort beschriebene System wird verwendet, um den Status der Unternehmensvorgänge wie Bestellung eines Materials, Erhalt einer Rechnung und Zahlung dieser Rechnung zu verfolgen. Das System automatisiert verschiedene Buchhaltungsprozesse. Das System kontrolliert Kundenbeziehungen und Service, Geschäftsprozesse und sorgt für eine bessere Kontrolle über Budgets und Produktionspläne. Darüber hinaus ist das System auch anpassbar, um spezifischen Anforderungen zu erfüllen.

Beschreibung der Erfindung

Es kann als der vorliegenden Erfindung zugrundeliegende Aufgabe angesehen werden, die Produktionsressourcensteuerung eines Produktionsnetzwerkes zu verbessern. Diese Aufgabe wird durch die vorliegende Erfindung gelöst.

Ein erster Aspekt der vorliegenden Erfindung betrifft eine Stromanalysevorrichtung für ein Produktionsnetzwerk.

Die Stromanalysevorrichtung umfasst: eine Datenextraktionseinrichtung, welche dazu ausgebildet ist, Unternehmensobjektdaten zu extrahieren; eine Datentransformationseinrichtung, welche dazu ausgebildet ist, die extrahierten Unternehmensobjektdaten in Gitterstrukturdaten zu transformieren.

Ferner umfasst die Stromanalysevorrichtung eine Datenanalyseeinrichtung, welche dazu ausgebildet ist, auf die transformierten Gitterstrukturdaten eine Operatorenrechnung und/oder eine graphentheoretische Berechnung anzuwenden, um eine Zeitentwicklung und mögliche Kennzahlwerte für das Produktionsnetzwerk zu erhalten.

Die vorliegende Erfindung ermöglicht vorteilhaft, dass ein Unternehmenszustand - dieser kann dabei in mindestens einen IST und einen SOLL-Wert unterschieden werden durch physikalische Modelle & Kennzahlen repräsentiert und analysiert werden.

Unternehmensobjekte bzw. Informationen werden in physikalischen Modellen transformiert, sodass Objekte Gitterplätzen entsprechen bzw. Material- und Informationsfluss durch Elektronenbewegung auf der Gitterstruktur abgebildet werden.

Die vorliegende Stromanalysevorrichtung und das vorliegende Stromanalyseverfahren der vorliegenden Erfindung generieren basierend auf Gitterstrukturdaten ein Logiksystem, wobei die Unternehmensstruktur des Produktionsnetzwerkes in unterschiedlichen Layern und Views strukturiert wird.

I. Unternehmenselement U (Arbeitsplätze, Fertigungsauftrag, allgemein Informationen) wird unterteilt in Unterraum $U_i$, $i \in \{1, ..., 6\}$, dabei entspricht $Ui$ einem Layer/View.

$\forall\ u \in U_i$ werden beispielsweise durch Knoten- und/oder Kantengröße und/oder -farbe dargestellt.

II. Das entstandene Bild kann als Gitterstruktur verstanden werden. Abbildung von U zur Gitterstruktur G:

**Unternehmenselement (U) $\rightarrow$ Gitterstruktur (G)**

Objekt $\rightarrow$ Gitterplatz

- Arbeitsplatz
- Maschine
- Sensor
- etc.

Verbindung → Gitterverbindung

- Werkslayout
- Arbeitsplan
- Transportweg

Flüsse → Gitterbewegungen

- Materialfluss
- Informationsfluss - Elektronenbewegungen Zwischen Gitterplätzen

Arbeitsplatz-Eigenschaft → Gitterwechselwirkung

- Rüstzeit
- Wartezeit
- Tageslaufzeiten

III. Die abgebildete Gitterstruktur wird beispielsweise durch den Hamiltonoperator beschrieben:

$$H = E + V$$

Die Gesamtenergie H des durch eine Gitterstruktur modellierten Systems wird bestimmt durch die vorhandenen kinetische Energie E von im Modell definierte Elektronen und der am Gitterplatz (Objekt) vorhandenen potentiellen Energie V (Wechselwirkung von Elektronen auf Gitterplatz).

Je nach Modellierung werden Erwartungswerte E und V (z.B. Störungsstelle) bestimmt und der Erwartungswert einer Kennzahl <A> berechnet (beispielsweise eine Korrelation zw. Arbeitsplätzen), durch die der Unternehmenszustand des modellierten Produktionsnetzwerkes analysiert werden kann.

Ein zweiter Aspekt der vorliegenden Erfindung betrifft ein Stromanalyseverfahren für ein Produktionsnetzwerk.

Das Stromanalyseverfahren umfasst folgende Verfahrensschritte: Extrahieren von Unternehmensobjektdaten mittels einer Datenextraktionseinrichtung; Transformieren der extrahierten Unternehmensobjektdaten in Gitterstrukturdaten mittels einer Datentransformationseinrichtung.

Ferner umfasst das Stromanalyseverfahren den Schritt des Anwendens einer Operatorenrechnung und/oder einer graphentheoretischen Berechnung auf die transformierten Gitterstrukturdaten mittels einer Datenanalyseeinrichtung, um eine Zeitentwicklung und mögliche Kennzahlwerte für das Produktionsnetzwerk zu erhalten.

Mit anderen Worten ausgedrückt, die vorliegende Erfindung ermöglicht, eine hochskalierbare und performante Datenabfrage von IT-Systemen zum Überwachen von betrieblichen Produktions- und Prozessschritten bereitzustellen, wie im ERP-System abgebildet.

Die vorliegende Erfindung ermöglicht vorteilhaft die Erfassung und Verarbeitung in Echtzeit von Unternehmensdaten, Sensordaten, Prozessdaten, Stammdaten über die Datenabfrage von unternehmensinternen IT-Systemen, durch eine Gitter-relationale Erfassung des Gesamtsystems des Produktionsnetzwerkes.

Das Stromanalyseverfahren bzw. die Stromanalysevorrichtung wertet dabei im IT-System vorhandene Rückmeldungen, Arbeitspläne, Bezeichnungen, bei der Produktion umgesetzte Energieeinheiten, Geldeinheiten sowie verarbeitetes Material und/oder Informationsflüsse aus, um eine Zeitentwicklung und mögliche Kennzahlwerte für das Produktionsnetzwerk zu erhalten.

Die Gitter-relationale Erfassung des Gesamtsystems des Produktionsnetzwerkes generiert einen das Produktionsnetzwerk abbildenden Netzwerkgraph, umfassend Symbole, Kreise und/oder Knoten, Dreiecke, Zylinder, Linien und / oder Kanten.

Das Stromanalyseverfahren bzw. die Stromanalysevorrichtung Bestimmte Metriken und/oder Filter auf die Gitter-relationale Abbildung anzuwenden und kann dabei die Gitterstruktur in der Form der Gitterstrukturdaten auswerten, um Kennzahlwerte für das Produktionsnetzwerk zu erhalten.

Die Anzeige der ermittelten Ergebnisse, d.h. der Kennzahlwerte des Produktionsnetzwerkes können beispielsweise durch Farbe der Elemente der Gitterstruktur, durch ihre Größe, Breite abgebildet werden.

Auch eine direkte Ausgabe von Kennzahlen, per Dashboard oder von weiteren Informationen und Daten kann durch eine Displayeinheit erfolgen.

Die vorliegende Erfindung ermöglicht vorteilhaft, Ineffizienz in der(n) Produktionskette(n) des Produktionsnetzwerkes zu identifizieren, Bereichs- und Ebenen-übergreifend zu analysieren, um eine automatisierte Wertstromanalysen der Produktion bereit zu stellen. Beispielsweise können dynamische Karten die Produktionsplanung und -steuerung mit in Echtzeit verfügbaren Wertstromanalysen verbessern, um Korrelationen im Produktionsnetzwerk zu entdecken, Abweichungen feststellen, oder Istzustände zu erfassen und zu visualisieren.

Die vorliegende Erfindung ermöglicht vorteilhaft Simulationen vorausschauende Analysen des Produktionsnetzwerkes bereitzustellen und erlaubt, die Integration des Produktionsnetzwerkes als Cyber-physische System (CPS), d.h. eine Kopplung und Koordination von Rechnernetzwerken und den mechanischen Elementen des Produktionsnetzwerkes über eine Telekommunikationsinfrastruktur, etwa das Internet.

Das Stromanalyseverfahren bzw. die Stromanalysevorrichtung umfasst beispielsweise in Raum und Zeit Darstellung einen Layer und eine Ansicht des Produktionsnetzwerkes, als Elemente werden Kreise und Linien dargestellt, und es können als Werkzeuge: Metrik und Filter angewendet werden.

Die vorliegende Erfindung löst das Problem, dass Wertstromanalysen zeit- und kostenintensiv sind, verringert die Komplexität der Datenverarbeitung des SAP Systems.

Die vorliegende Erfindung vereinfacht die Anbindung von Transaktionscodes / ABAP Programme

Die vorliegende Erfindung ersetzt manuelle Wertstromanalyse und vermeidet das Auftreten von ungenutztem Datenpotential und Flüchtigkeitsfehler.

Ferner verkürzt die vorliegende Erfindung lange Kommunikationswege und schafft durchgängige Transparenz durch die Ersetzung von dezentralen und manuell erstellten Dashboards.

Das Stromanalyseverfahren der vorliegenden Erfindung ermöglicht, dass nur einen monodirektionalen Datenfluss vom ERP-System heraus benötigt wird, d.h. dass Daten nur in eine Richtung fließen müssen.

Das Stromanalyseverfahren spielt keine Daten zurück in das ERP-System des Unternehmens. Allerdings stellt das ERP-System das Grundgerüst eines Unternehmens dar.

Die vorliegende Erfindung bildet das Grundgerüst des Unternehmens mit Orten oder Knotenpunkten, diese entsprechen dann beispielsweise Arbeitsplätzen, Produktionsstraßen, Lagerplätze, ganze Produktionswerke, Buchungskreise oder Kunden. Ferner werden Verbindungen oder Kanten zwischen den Orten oder Knotenpunkten definiert, diese definierten Verbindungen stellen beispielsweise Straßen oder Verbindungen für Informationsflüsse, Materialflüsse, Datenströme oder Produktflüsse dar.

Hieraus lassen sich die gängigen Kennzahlen des Produktionsnetzwerkes ableiten und die im überwachten Produktionsnetzwerk umgesetzten Ressourcen wie Personaleinsatz, Betriebsmittel, Material, Informations- und Kommunikationsflüsse abbilden und überwachen.

Die vorliegende Erfindung ermöglicht vorteilhaft, die Gesamteffizienz des Produktionsnetzwerkes bzw. des Unternehmens zu kontrollieren und zu steuern und basierend auf einer intelligenten Steuerung zu steigern und/oder zu verbessern. Zum Beispiel ermöglicht die vorliegende Erfindung, Überbestände bei der Produktion und Verschwendungen beim Einsatz von Ressourcen zu identifizieren und zu vermeiden.

Darüber hinaus bildet die vorliegende Erfindung das Grundgerüst und die Basis für vollautomatische Wertstromanalysen. Die Stromanalysevorrichtung der vorliegenden Erfindung umfasst beispielsweise eine Datenextraktionseinrichtung etwa in der Form eines Webservices.

Dieser stellt beispielsweise eine ABAP Programmiersprachen-Schnittstelle zwischen einem ETL Prozessor dar. Die Abkürzung "ETL" steht hier bei für Englisch "Extract, Transform, Load" und beschreibt einen Datenverarbeitungsprozess, der aus einer Vielzahl von unterschiedlich strukturierten Datenbanken oder -quellen in einer oder zumindest einer verringerten Anzahl an Zieldatenbanken vereinigt werden.

Hierbei werden bestimmte Tabellen, welche benötigt werden, um das Grundgerüst des Unternehmens abzubilden, identifiziert, angefragt, und kopiert.

Der Webservice bzw. das JAVA Programm ist zum einen zuständig, die erste Datenbefüllung der von dem Stromanalyseverfahren der vorliegenden Erfindung erzeugten Datenbank, nachfolgende auch als "fLUMEN"-Datenbank bezeichnet, vorzunehmen und darüber hinaus im täglichen Betrieb durch inkrementelle Updates abzubilden.

Diese sind relevant, da SAP Nutzer Veränderungen durch zum Beispiel Buchungen oder Rückmeldungen im System respektive in den Datenbanken vornehmen. Die vorliegende Erfindung bzw. das Stromanalyseverfahren kopiert nicht immer die komplette SAP-Datenbank, da diese zu groß wäre, sondern immer nur betroffene Felder in den Datenbanken.

Somit erhöht das Stromanalyseverfahren die Leistung des Produktionsnetzwerkes. Dabei werden die Daten des ERP-Systems in Datenbanken zur Weiterverarbeitung systematisch verschoben, damit die nachfolgend angekoppelten Webservices (für Statische Daten und dynamische) gezielt und schnell auf die verschobenen Daten zugreifen können.

Aus Sicherheitsgründen kann das FrontEnd (basierend auf gängige Browser) nicht direkt mit den Webservices kommunizieren. Hierfür wird dazwischen ein so bezeichneter "Node. js" -Server eingesetzt. Dieser dient zum einen als Sicherheitsbrücke und zum zweiten als Dolmetscher. Der Node.js Server übersetzt die vom Backend verwendete Datensyntax für das FrontEnd.

Der Benutzer der fLUMEN-Datenbank interagiert mit dem FrontEnd, welches ihm das Unternehmen bzw. das Produktionsnetzwerk visualisiert. Die fLUMEN-Datenbank bildet dabei die Grundlage für das als Leitstand ausgebildete FrontEnd, welches den Ist-Zustand des Produktionsnetzwerks darstellt.

Gegenüber anderen Systemen ist die fLUMEN Visualisierung immer in "Echtzeit" damit Entscheidung auf aktuellen Daten getroffen werden können.

Das FrontEnd kann nun in 2-dimensionaler Darstellung oder in 3-dimensionaler Darstellung auf PC, TV, Beamer, Tablet oder SmartPhone genutzt werden. Ferner kann augmented reality, auf Deutsch auch erweiterte Realität, kurz AR, und virtual reality, auf Deutsch auch virtuelle Realität, kurz VR, zum Einsatz kommen.

Gemäß einer möglichen Ausführungsform der vorliegenden Erfindung ist vorgesehen, dass die Datenextraktionseinrichtung dazu ausgebildet ist, in einem ersten Betriebsmodus und in einem zweiten Betriebsmodus verwendet zu werden, wobei die Datenextraktionseinrichtung in dem ersten Betriebsmodus dazu ausgebildet ist, die Unternehmensobjektdaten inkrementell zu extrahieren, wobei in dem ersten Betriebsmodus ein inkrementelles Update-Intervall für eine inkrementelle Datenextraktion vorzugsweise bis zu 7 Tage beträgt, besonders bevorzugt bis zu 1 Tag, insbesondere bevorzugt bis zu 2 Stunden, höchst bevorzugt bis zu 5 Minuten; und wobei die Datenextraktionseinrichtung in dem zweiten Betriebsmodus dazu ausgebildet ist, die Unternehmensobjektdaten vollumfänglich zu extrahieren, wobei in dem zweiten Betriebsmodus ein Update-Intervall für eine vollumfängliche Datenextraktion vorzugsweise mindestens 7 Tage beträgt, besonders bevorzugt mindestens 14 Tage, insbesondere bevorzugt mindestens 30 Tage, höchst bevorzugt mindestens 2 Monate.

Gemäß einer möglichen Ausführungsform der vorliegenden Erfindung ist vorgesehen, dass die Datenanalyseeinrichtung dazu ausgebildet ist, als Operatorenrechnung einen Hamiltonoperator anzuwenden; oder dass die Datenanalyseeinrichtung dazu ausgebildet ist, als graphentheoretische Berechnung ein Maximalfluss-Problem anzuwenden, etwa mit einem Max-Flow-Min-Cut-Ansatz oder mit einem Menger-Ansatz.

Gemäß einer möglichen Ausführungsform der vorliegenden Erfindung ist vorgesehen, dass die Datenanalyseeinrichtung dazu ausgebildet ist, mit dem Hamiltonoperator einen Erwartungswert für die Kennzahlwerte des Produktionsnetzwerkes zu berechnen.

Gemäß einer möglichen Ausführungsform der vorliegenden Erfindung ist vorgesehen, dass die Datenextraktionseinrichtung dazu ausgebildet ist, mit den Unternehmensobjektdaten Unternehmenselemente des Produktionsnetzwerkes abzubilden, wobei als abgebildete Unternehmenselemente verwendet werden: ein Objekt, etwa in der Form eines Arbeitsplatzes, einer Maschine, oder eines Sensorsystems; und/oder eine räumliche oder zeitliche Anordnung, etwa in der Form eines Werkslayouts, eines Arbeitsplans, oder eines Transportwegs; und/oder einen Material- oder Informationsfluss; und/oder eine Arbeitsplatzeigenschaft, etwa in der Form einer Rüstzeit, oder einer Wartezeit.

Gemäß einer möglichen Ausführungsform der vorliegenden Erfindung ist vorgesehen, dass die Datenextraktionseinrichtung dazu ausgebildet ist, mit einem Unternehmens-Informationssystem, ERP, gekoppelt zu werden.

Gemäß einer möglichen Ausführungsform der vorliegenden Erfindung ist vorgesehen, dass die Datentransformationseinrichtung dazu ausgebildet ist, folgende Gitterstrukturelemente als zu transformierende die Gitterstrukturdaten zu verwenden:

- einen Gitterplatz für das Objekt; und/oder

- eine Gitterverbindung für die räumliche oder zeitliche Anordnung; und/oder

- eine Elektronenbewegung zwischen Gitterplätzen für den Material- oder Informationsfluss; und/oder

- eine Wechselwirkung auf einem Gitterplatz für die Arbeitsplatzeigenschaft.

Gemäß einer möglichen Ausführungsform der vorliegenden Erfindung ist vorgesehen, dass die Stromanalysevorrichtung ferner eine Webdiensteinrichtung aufweist, welcher dazu ausgebildet ist, die berechnete Zeitentwicklung und die berechneten mögliche Kennzahlwerte für das Produktionsnetzwerk an ein Kommunikationsnetzwerk zu übersenden.

Gemäß einer möglichen Ausführungsform der vorliegenden Erfindung ist vorgesehen, dass die Stromanalysevorrichtung ferner eine Benutzerschnittstelleneinrichtung aufweist, welcher dazu ausgebildet ist, die berechnete Zeitentwicklung und die berechneten mögliche Kennzahlwerte für das Produktionsnetzwerk und/oder graphentheoretische Korrelationen für das Produktionsnetzwerk anzuzeigen und mittels Steuerelementen Benutzereingaben für die Stromanalysevorrichtung zu verarbeiten.

Gemäß einer möglichen Ausführungsform der vorliegenden Erfindung ist vorgesehen, dass die Stromanalysevorrichtung ferner eine Benutzerschnittstelleneinrichtung aufweist, welche dazu ausgebildet ist,

- einen oder den Gitterplatz für das Objekt anzuzeigen; und/oder

- eine oder die Gitterverbindung für die räumliche oder zeitliche Anordnung anzuzeigen; und/oder

- eine oder die Wechselwirkung und/oder eine oder die Bewegung zwischen Gitterplätzen für den Material- oder Informationsfluss und/oder eine oder die Arbeitsplatzeigenschaft anzuzeigen; und/oder

- die berechnete Zeitentwicklung und berechnete Kennzahlwerte für das Produktionsnetzwerk anzuzeigen.

Ein weiterer Aspekt der vorliegenden Erfindung betrifft ein Produktionsnetzwerk, welches durch eine Vielzahl von Unternehmenszuständen charakterisierbar ist, wobei jedem der Vielzahl an Unternehmenszuständen ein oder mehrere zeitlich veränderliche Kennzahlwerte zuordenbar sind, umfassend mindestens eine Stromanalysevorrichtung nach dem ersten Aspekt oder einer beliebigen Ausführungsform des ersten Aspektes.

Gemäß einer möglichen Ausführungsform der vorliegenden Erfindung ist vorgesehen, dass das Stromanalyseverfahren ferner folgende Verfahrensschritte umfasst:

Verwenden von einem ersten Betriebsmodus und einem zweiten Betriebsmodus für die Datenextraktionseinrichtung;

wobei die Datenextraktionseinrichtung in dem ersten Betriebsmodus die Unternehmensobjektdaten inkrementell extrahiert, wobei in dem ersten Betriebsmodus ein inkrementelles Update-Intervall für eine inkrementelle Datenextraktion vorzugsweise bis zu 7 Tage beträgt, besonders bevorzugt bis zu 1 Tag, insbesondere bevorzugt bis zu 2 Stunden, höchst bevorzugt bis zu 5 Minuten; und

wobei die Datenextraktionseinrichtung in dem zweiten Betriebsmodus die Unternehmensobjektdaten vollumfänglich extrahiert, wobei in dem zweiten Betriebsmodus ein Update-Intervall für eine vollumfängliche Datenextraktion vorzugsweise mindestens 7 Tage beträgt, besonders bevorzugt mindestens 14 Tage, insbesondere bevorzugt mindestens 30 Tage, höchst bevorzugt mindestens 2 Monate.

Gemäß einer möglichen Ausführungsform der vorliegenden Erfindung ist vorgesehen, dass die Datenanalyseeinrichtung als Operatorenrechnung einen Hamiltonoperator verwendet; oder wobei die Datenanalyseeinrichtung als graphentheoretische Berechnung ein Maximalfluss-Problem verwendet, etwa mit einem Max-Flow-Min-Cut-Ansatz oder mit einem Menger-Ansatz.

Gemäß einer möglichen Ausführungsform der vorliegenden Erfindung ist vorgesehen, dass die Datenanalyseeinrichtung mit dem Hamiltonoperator einen Erwartungswert für die Kennzahlwerte des Produktionsnetzwerkes berechnet.

Kurze Beschreibung der Figuren

Die beiliegenden Zeichnungen sollen ein weiteres Verständnis der Ausführungsformen der Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:

Fig. 1: eine schematische Darstellung einer Stromanalysevorrichtung für ein Produktionsnetzwerk gemäß einer Ausführungsform der vorliegenden Erfindung;

Fig. 2: eine schematische Darstellung eines Aufbaus eines Produktionsnetzwerkes gemäß einer Ausführungsform der vorliegenden Erfindung;

Fig. 3: eine schematische Darstellung eines Flussdiagramms eines Stromanalyseverfahrens für ein Produktionsnetzwerk gemäß einer Ausführungsform der vorliegenden Erfindung; und

Fig. 4: eine schematische Darstellung eines Flussdiagramms eines Stromanalyseverfahrens für ein Produktionsnetzwerk gemäß einer Ausführungsform der vorliegenden Erfindung.

Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Der Begriff "Produktionsnetzwerk", wie von der vorliegenden Erfindung verwendet, umfasst dabei beispielsweise einen Produktionsstandort, eine Produktionsanlage, d.h. eine Sachanlage, die für die Produktion von Waren genutzt wird, üblicherweise Fabriken, Fertigungsstraßen und Großgeräte. Der Begriff "Produktionsnetzwerk", wie von der vorliegenden Erfindung verwendet, umfasst dabei beispielsweise insbesondere auch eine Vielzahl von vernetzen Produktionsanlage in einer Fabrik.

Der Begriff "graphentheoretische Berechnung", wie von der vorliegenden Erfindung verwendet, bezeichnet beispielsweise eine Berechnung die Eigenschaften von Netzwerkgraphen und ihre Beziehungen zueinander charakterisiert, wobei Graphentheoretische Konzepte und Algorithmen zur Lösung einer Optimierungsaufgabe eingesetzt werden können.

Der Begriff "Gitterstrukturdaten", wie von der vorliegenden Erfindung verwendet, bezeichnet beispielsweise eine Gesamtheit von Daten über eine Gitterstruktur, welche einen Unternehmenszustand durch physikalische Modelle repräsentiert und modelliert. Unternehmensobjekte bzw. Informationen werden in physikalischen Modellen transformiert, sodass Objekte Gitterplätzen entsprechen bzw. Material- und Informationsfluss durch Elektronenbewegung auf der Gitterstruktur abgebildet werden.

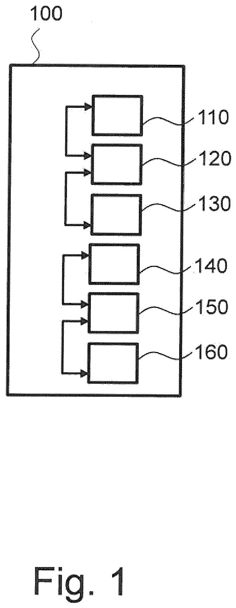

Die Figur 1 zeigt eine schematische Darstellung einer Stromanalysevorrichtung für ein Produktionsnetzwerk gemäß einer Ausführungsform der vorliegenden Erfindung.

Gemäß einer Ausführungsform der vorliegenden Erfindung erfolgt eine vollautomatische Wertstromanalyse, eine Darstellung einer Karte des Unternehmens bzw. des Produktionsnetzwerkes, Unternehmenslandkarte (Vogelperspektive), oder eine Prozesslandkarte

Die vorliegende Erfindung ermöglicht ein skalierbare BigData Pipeline, in der Form einer Industrie 4.0 Plattform bereitzustellen. Mit anderen Worten ein sogenannter digitaler Zwilling des Produktionsnetzwerkes bzw. des ERP-Systems wird generiert.

Die Figur 1 zeigt eine schematische Darstellung einer Stromanalysevorrichtung 100, welche eine Datenextraktionseinrichtung 110, Datentransformationseinrichtung 120 und eine Datenanalyseeinrichtung 130 umfasst:

Die Datenextraktionseinrichtung 110 ist dazu ausgebildet, Unternehmensobjektdaten zu extrahieren.

Die Datentransformationseinrichtung 120 ist dazu ausgebildet, die extrahierten Unternehmensobjektdaten in Gitterstrukturdaten zu transformieren.

Die Datenanalyseeinrichtung 130 ist dazu ausgebildet, auf die transformierten Gitterstrukturdaten eine Operatorenrechnung und/oder eine graphentheoretische Berechnung anzuwenden, um eine Zeitentwicklung und mögliche Kennzahlwerte für das Produktionsnetzwerk zu erhalten.

Die Stromanalysevorrichtung 100 umfasst ferner beispielsweise eine Webdiensteinrichtung 140 und/oder eine Anzeigeeinrichtung 150 und/oder eine Benutzerschnittstelleneinrichtung 160.

Die Webdiensteinrichtung 140 ist beispielsweise dazu ausgebildet, die berechnete Zeitentwicklung und die berechneten mögliche Kennzahlwerte für das Produktionsnetzwerk an ein Kommunikationsnetzwerk zu übersenden.

Die Anzeigeeinrichtung 150 ist beispielsweise dazu ausgebildet, die Gitterstruktur anzuzeigen. Dabei kann eine Visualisierung erfolgen und klare einfache Darstellungsformen gewählt werden, dies ermöglicht, dass Synergieeffekte bereichsübergreifend erkannt werden, Verluste und Überproduktionen automatisch dargestellt werden und Material- und Informationsströme visualisierest werden.

Die Benutzerschnittstelleneinrichtung 160 ist beispielsweise dazu ausgebildet, die berechnete Zeitentwicklung und die berechneten mögliche Kennzahlwerte für das Produktionsnetzwerk und/oder graphentheoretische Korrelationen für das Produktionsnetzwerk anzuzeigen und mittels Steuerelementen Benutzereingaben für die Stromanalysevorrichtung 100 zu verarbeiten.

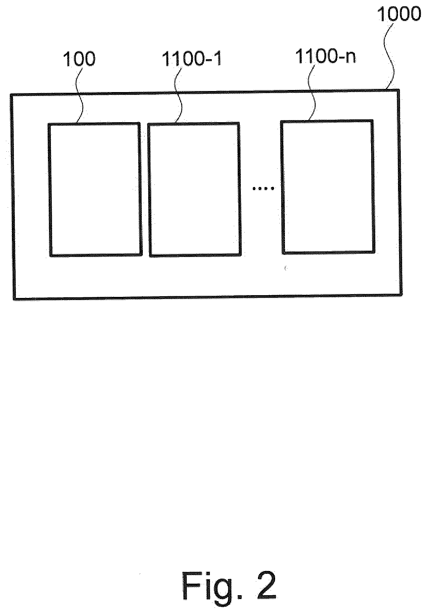

Die Figur 2 zeigt eine schematische Darstellung eines Aufbaus eines Produktionsnetzwerkes gemäß einer Ausführungsform der vorliegenden Erfindung.

Das Produktionsnetzwerk 1000 kann eine Vielzahl von Produktionsstätten 1100-n umfassen sowie mindestens eine Stromanalysevorrichtung 100.

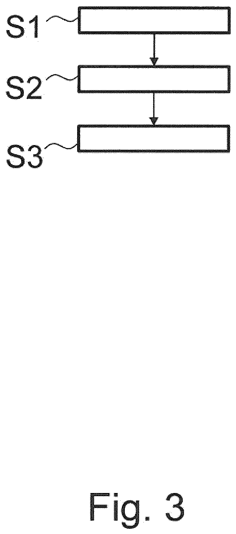

Die Figur 3 zeigt eine schematische Darstellung eines Flussdiagramms eines Stromanalyseverfahrens für ein Produktionsnetzwerk gemäß einer Ausführungsform der vorliegenden Erfindung.

Das Stromanalyseverfahren für ein Produktionsnetzwerk umfasst folgende Verfahrensschritte:

Als ein erster Verfahrensschritt erfolgt ein Extrahieren S1 von Unternehmensobjektdaten mittels einer Datenextraktionseinrichtung.

Als ein zweiter Verfahrensschritt erfolgt ein Transformieren S2 der extrahierten Unternehmensobj ektdaten in Gitterstrukturdaten mittels einer Datentransformationseinrichtung.

Als ein dritter Verfahrensschritt erfolgt ein Anwenden S3 einer Operatorenrechnung und/oder einer graphentheoretischen Berechnung auf die transformierten Gitterstrukturdaten mittels einer Datenanalyseeinrichtung, um eine Zeitentwicklung und mögliche Kennzahlwerte für das Produktionsnetzwerk zu erhalten.

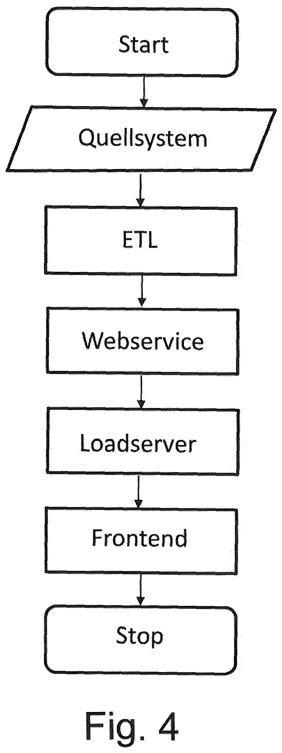

Die Figur 4 zeigt eine schematische Darstellung eines Flussdiagramms eines Stromanalyseverfahrens für ein Produktionsnetzwerk gemäß einer Ausführungsform der vorliegenden Erfindung.

Das Diagramm zeigt den logischen Datenfluss von Quellsystemen bis zum Frontend:

Das Quellsystem S: Kann als ein ERP-System, als ein MES-System, als ein SCADA-System, oder als ein HMI-System oder als ein sonstiges Datenverarbeitungssystem ausgebildet sein. Dies entspricht einer Automatisierungspyramide.

i. Das Quellsystemraum S wird nach Unternehmensobjekte Raum U abgebildet, für

$$u \in U, \; s_1, \; ..., \; s_n \in S, \; f : S \to U,$$

$$u = f(s_1, \; ...,s_n). \tag{2}$$

ii. Unternehmensobjekte U nach Gitterstruktur G erfolgt durch:

$$t: U \to G, \; g \in G, \; u_1, \; ..., \; u_n \in U \; mit$$

$$g = t(u_1, \; ..., \; u_n). \tag{3}$$

iii. Definieren des Hamiltonoperators H

$$H = E(u) + V(u) \tag{4}$$

auf Gitterstruktur G: Erwartungswert von Kennzahl berechnen.

Auswirkungen: Schnelle Abfragen und interne Berechnung, ohne Daten zurück ins Quellsystem zu spielen. Hieraus ergibt sich Datamining, physikalische Berechnung und Analyse, Filtern.

Der Webservice ist dabei wie folgt ausgebildet: Liest $u \in U$ und Erwartungswert von Kennzahlen.

Der Loadserver ist dabei wie folgt ausgebildet: Sicherheitsbrücke zw. Frontend und Webservice.

Das Frontend - beispielsweise in der Form einer Anzeigeneinrichtung ist dabei wie folgt ausgebildet: Zeichnet die Gitterstruktur, Kennzahlen und Materials- oder Informationsfluss.

Die Umgebung für die fLUMEN-Datenbank umfasst einen Docker-Container für den MongoDb, einen Docker-Container für den LoadServer, und einen Docker-Container für den BrainServer und einen Docker-Container für den Webserver.

Die von der vorliegenden Erfindung verwendete BIG Data Pipeline ermöglicht, eine automatische und sehr schnelle Analysegeschwindigkeit zu erreichen, echtzeitfähige Datenübertragung zu gewährleisten, und einen hohen Grad einer Fehlerverminderung - keine oder fast keine Übertragungsfehler - zu erzielen.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Stromanalysevorrichtung (100) für ein Produktionsnetzwerk, wobei die Stromanalysevorrichtung (100) umfasst:

   - eine Datenextraktionseinrichtung (110), welche dazu ausgebildet ist, Unternehmensobjektdaten zu extrahieren;
   - eine Datentransformationseinrichtung (120), welche dazu ausgebildet ist, die extrahierten Unternehmensobjektdaten in Gitterstrukturdaten zu transformieren; und
   - eine Datenanalyseeinrichtung (130), welche dazu ausgebildet ist, auf die transformierten Gitterstrukturdaten eine Operatorenrechnung und/oder eine graphentheoretische Berechnung anzuwenden, um eine Zeitentwicklung und mögliche Kennzahlwerte für das Produktionsnetzwerk zu erhalten.

2. Stromanalysevorrichtung (100) nach Anspruch 1,
   wobei die Datenextraktionseinrichtung (110) dazu ausgebildet ist, in einem ersten Betriebsmodus und in einem zweiten Betriebsmodus verwendet zu werden;
   wobei die Datenextraktionseinrichtung (110) in dem ersten Betriebsmodus dazu ausgebildet ist, die Unternehmensobjektdaten inkrementell zu extrahieren, wobei in dem ersten Betriebsmodus ein inkrementelles Update-Intervall für eine inkrementelle Datenextraktion vorzugsweise bis zu 7 Tage beträgt, besonders bevorzugt bis zu 1 Tag, insbesondere bevorzugt bis zu 2 Stunden, höchst bevorzugt bis zu 5 Minuten; und
   wobei die Datenextraktionseinrichtung (110) in dem zweiten Betriebsmodus dazu ausgebildet ist, die Unternehmensobjektdaten vollumfänglich zu extrahieren, wobei in dem zweiten Betriebsmodus ein Update-Intervall für eine vollumfängliche Datenextraktion vorzugsweise mindestens 7 Tage beträgt, besonders bevorzugt mindestens 14 Tage, insbesondere bevorzugt mindestens 30 Tage, höchst bevorzugt mindestens 2 Monate.

3. Stromanalysevorrichtung (100) nach Anspruch 1 oder nach Anspruch 2,
   wobei die Datenanalyseeinrichtung (130) dazu ausgebildet ist, als Operatorenrechnung einen Hamiltonoperator anzuwenden; oder wobei die Datenanalyseeinrichtung (130) dazu ausgebildet ist, als graphentheoretische Berechnung ein Maximalfluss-Problem anzuwenden, etwa mit einem Max-Flow-Min-Cut-Ansatz oder mit einem Menger-Ansatz.

4. Stromanalysevorrichtung (100) nach Anspruch 3,
   wobei die Datenanalyseeinrichtung (130) dazu ausgebildet ist, mit dem Hamiltonoperator einen Erwartungswert für die Kennzahlwerte des Produktionsnetzwerkes zu berechnen.

5. Stromanalysevorrichtung (100) nach einem der vorhergehenden Ansprüche,
   wobei die Datenextraktionseinrichtung (110) dazu ausgebildet ist, mit den Unternehmensobjektdaten Unternehmenselemente des Produktionsnetzwerkes abzubilden, wobei als abgebildete Unternehmenselemente verwendet werden:

   - ein Objekt, etwa in der Form eines Arbeitsplatzes, einer Maschine, oder eines Sensorsystems; und/oder
   - eine räumliche oder zeitliche Anordnung, etwa in der Form eines Werkslayouts, eines Arbeitsplans, oder eines Transportwegs; und/oder
   - einen Material- oder Informationsfluss; und/oder
   - eine Arbeitsplatzeigenschaft, etwa in der Form einer Rüstzeit, oder einer Wartezeit.

6. Stromanalysevorrichtung (100) nach Anspruch 5,
   wobei die Datenextraktionseinrichtung (110) dazu ausgebildet ist, mit einem Unternehmens-Informationssystem, ERP, gekoppelt zu werden.

7. Stromanalysevorrichtung (100) nach Anspruch 5 oder 6, wobei die Datentransformationseinrichtung dazu ausgebildet ist, folgende Gitterstrukturelemente als zu transformierende die Gitterstrukturdaten zu verwenden:

   - einen Gitterplatz für das Objekt; und/oder
   - eine Gitterverbindung für die räumliche oder zeitliche Anordnung; und/oder
   - eine Elektronenbewegung zwischen Gitterplätzen für den Material- oder Informationsfluss; und/oder
   - eine Wechselwirkung auf einem Gitterplatz für die Arbeitsplatzeigenschaft.

8. Stromanalysevorrichtung (100) nach einem der vorhergehenden Ansprüche,

wobei die Stromanalysevorrichtung (100) ferner eine Webdiensteinrichtung (140) aufweist, welcher dazu ausgebildet ist, die berechnete Zeitentwicklung und die berechneten mögliche Kennzahlwerte für das Produktionsnetzwerk an ein Kommunikationsnetzwerk zu übersenden.

9. Stromanalysevorrichtung (100) nach einem der vorhergehenden Ansprüche,
wobei die Stromanalysevorrichtung (100) ferner eine Benutzerschnittstelleneinrichtung (160) aufweist, welcher dazu ausgebildet ist, die berechnete Zeitentwicklung und die berechneten mögliche Kennzahlwerte für das Produktionsnetzwerk und/oder graphentheoretische Korrelationen für das Produktionsnetzwerk anzuzeigen und mittels Steuerelementen Benutzereingaben für die Stromanalysevorrichtung (100) zu verarbeiten.

10. Stromanalysevorrichtung (100) nach einem der vorhergehenden Ansprüche,
wobei die Stromanalysevorrichtung (100) ferner eine Anzeigeeinrichtung (150) aufweist, welcher dazu ausgebildet ist,

- einen oder den Gitterplatz für das Objekt anzuzeigen; und/oder
- eine oder die Gitterverbindung für die räumliche oder zeitliche Anordnung anzuzeigen; und/oder
- eine oder die Wechselwirkung und/oder eine oder die Bewegung zwischen Gitterplätzen für den Material- oder Informationsfluss und/oder eine oder die Arbeitsplatzeigensahaft anzuzeigen; und/oder
- die berechnete Zeitentwicklung und berechnete Kennzahlwerte für das Produktionsnetzwerk anzuzeigen.

11. Produktionsnetzwerk (1000), welches durch eine Vielzahl von Unternehmenszuständen charakterisierbar ist, wobei jedem der Vielzahl an Unternehmenszuständen ein oder mehrere zeitlich veränderliche Kennzahlwerte zuordenbar sind, umfassend mindestens eine Stromanalysevorrichtung (100) nach einem der vorhergehenden Ansprüche.

12. Stromanalyseverfahren für ein Produktionsnetzwerk, wobei das Stromanalyseverfahren folgende Verfahrensschritte umfasst:

- Extrahieren (S1) von Unternehmensobjektdaten mittels einer Datenextraktionseinrichtung;
- Transformieren (S2) der extrahierten Unternehmensobjektdaten in Gitterstrukturdaten mittels einer Datentransformationseinrichtung (120); und
- Anwenden (S3) einer Operatorenrechnung und/oder einer graphentheoretischen Berechnung auf die transformierten Gitterstrukturdaten mittels einer Datenanalyseeinrichtung (130), um eine Zeitentwicklung und mögliche Kennzahlwerte für das Produktionsnetzwerk zu erhalten.

13. Stromanalyseverfahren nach Anspruch 12, wobei das Stromanalyseverfahren ferner folgende Verfahrensschritte umfasst:

Verwenden von einem ersten Betriebsmodus und einem zweiten Betriebsmodus für die Datenextraktionseinrichtung (110);
wobei die Datenextraktionseinrichtung (110) in dem ersten Betriebsmodus die Unternehmensobjektdaten inkrementell extrahiert, wobei in dem ersten Betriebsmodus ein inkrementelles Update-Intervall für eine inkrementelle Datenextraktion vorzugsweise bis zu 7 Tage beträgt, besonders bevorzugt bis zu 1 Tag, insbesondere bevorzugt bis zu 2 Stunden, höchst bevorzugt bis zu 5 Minuten; und
wobei die Datenextraktionseinrichtung (110) in dem zweiten Betriebsmodus die Unternehmensobjektdaten vollumfänglich extrahiert, wobei in dem zweiten Betriebsmodus ein Update-Intervall für eine vollumfängliche Datenextraktion vorzugsweise mindestens 7 Tage beträgt, besonders bevorzugt mindestens 14 Tage, insbesondere bevorzugt mindestens 30 Tage, höchst bevorzugt mindestens 2 Monate.

14. Stromanalyseverfahren nach einem der vorhergehenden Ansprüche 12 bis 13,
wobei die Datenanalyseeinrichtung (130) als Operatorenrechnung einen Hamiltonoperator verwendet; oder
wobei die Datenanalyseeinrichtung (130) als graphentheoretische Berechnung ein Maximalfluss-Problem verwendet, etwa mit einem Max-Flow-Min-Cut-Ansatz oder mit einem Menger-Ansatz;
wobei die Datenanalyseeinrichtung (130) mit dem Hamiltonoperator und/oder durch die graphentheoretische Berechnung einen Erwartungswert für die Kennzahlwerte des Produktionsnetzwerkes berechnet.

15. Stromanalyseverfahren nach einem der vorhergehenden Ansprüche 12 bis 14,
wobei die Datenextraktionseinrichtung (110) mit den Unternehmensobjektdaten Unternehmenselemente des Produktionsnetzwerkes abbildet.

Fig. 1

Fig. 2

S1

S2

S3

## Fig. 3

Start

Quellsystem

ETL

Webservice

Loadserver

Frontend

Stop

# Fig. 4

| | Europäisches Patentamt / European Patent Office / Office européen des brevets | **EUROPÄISCHER RECHERCHENBERICHT** | **Nummer der Anmeldung**<br>EP 18 16 2934 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Wikipedia: "Extract, transform, load", INTERNET ARTICLE, 18. März 2018 (2018-03-18), XP055493883, Gefunden im Internet: URL:https://en.wikipedia.org/w/index.php?title=Extract,_transform,_load&oldid=831108879 [gefunden am 2018-07-19] * Seite 1 - Seite 4 * ----- | 1-15 | INV.<br>G06Q10/06 |
| X | Jürgen Kletti: "Manufacturing Execution Systems - MES", 28. Juni 2007 (2007-06-28), Springer, XP055493694, ISBN: 978-3-540-49743-1 Seiten ToC,Ch01-Ch11,Ind, * z.B. Kapitel 1 und 10 * ----- | 1-15 | |
| X | Corey L. Lanum: "Visualizing Graph Data", 15. Dezember 2016 (2016-12-15), Manning Publications, XP055494039, ISBN: 978-1-61729-307-8 * z.B. Kapitel 1, 3 und 4 * ----- | 1-15 | **RECHERCHIERTE SACHGEBIETE (IPC)**<br>G06Q |
| A | Wikipedia: "Graph theory", INTERNET ARTICLE, 5. März 2018 (2018-03-05), XP055493885, Gefunden im Internet: URL:https://en.wikipedia.org/w/index.php?title=Graph_theory&oldid=828902809 [gefunden am 2018-07-19] * das ganze Dokument * ----- | 1-15 | |

-/--

Der vorliegende Recherchenbericht wurde für alle Patentansprüche erstellt

| Recherchenort | Abschlußdatum der Recherche | Prüfer |
|---|---|---|
| München | 20. Juli 2018 | Krafft, Gerald |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

**Nummer der Anmeldung**

EP 18 16 2934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Wikipedia: "Flow network", INTERNET ARTICLE, 21. Februar 2018 (2018-02-21), XP055493887, Gefunden im Internet: URL:https://en.wikipedia.org/w/index.php?title=Flow_network&oldid=826817606 [gefunden am 2018-07-19] * das ganze Dokument * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 20. Juli 2018 | Krafft, Gerald |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015019315 A1